# EUROPÄISCHE PATENTSCHRIFT

(11) **EP 0 503 224 B1**
(45) Veröffentlichungstag und Bekanntmachung des Hinweises auf die Patenterteilung: **03.07.1996**
(21) Anmeldenummer: 92100229.1
(22) Anmeldetag: 09.01.1992
(51) Int. Cl.: B65D 5/74, B65D 51/20, B65D 47/08

(54) **Ausgiesseinrichtung für eine Fliessmittelpackung und Verfahren zur Herstellung derselben**
Pouring device for fluid container and method of its manufacture
Dispositif verseur pour emballage de produit fluide et procédé de sa fabrication

(30) Priorität: 09.03.1991 DE 4107607
(43) Veröffentlichungstag der Anmeldung: 16.09.1992
(73) Patentinhaber: Tetra Laval Holdings & Finance SA, 1009 Pully (CH)
(72) Erfinder: Reil, Wilhelm, W-6140 Bensheim (DE); Knobloch, Gerd, W-6103 Griesheim (DE); Push, Gottfried, W-6102 Pfungstadt (DE)
(74) Vertreter: Weber, Dieter, Dr.

(56) Entgegenhaltungen:
- EP-A- 0 318 606
- FR-A- 2 565 942
- US-A- 1 344 516
- US-A- 2 625 306
- US-A- 4 892 217

## Beschreibung

Die Erfindung betrifft eine Ausgießeinrichtung aus Kunststoff für die Anbringung an einem Loch einer Packung für fließfähiges Füllgut, wobei die Ausgießeinrichtung ein Unterteil mit einer Ausgießöffnung und ein Verschlußteil aufweist, die über ein Scharnier bewegbar angelenkt miteinander verbunden sind, und das Verschlußteil eine becherförmige Vertiefung mit einem Boden und einem an dessen Rand hochstehenden Bund aufweist, das Unterteil auch einen hochstehenden Bund hat und wobei die becherförmige Vertiefung des Verschlußteiles in den hochstehenden Bund des Unterteils unter Abdeckung der Ausgießöffnung hineinbewegbar ist.

Eine Ausgießeinrichtung dieser Art ist aus der EP-A-0.291.112 bekannt. Diese tubusförmige Packung hat einen flachen Oberboden mit Schichtaufbau, wobei ein steiferes Trägermaterial mit Barriereschichten verbunden ist. Der flache Oberboden ist über einen hochstehenden Rand mit dem Packungstubus verbunden. Im Oberboden ist durch eine perforierte Schwächungslinie oder eine Schnittlinie ein Loch vorgesehen, auf das die Ausgießeinrichtung mit dem hochstehenden Bund des Unterteiles eingedrückt und durch Einschnappen oder Klemmen befestigt wird. Die bekannte Ausgießeinrichtung ist ein besonders ausgestaltetes Teil aus Kunststoff, durch welches das Entleeren der Packung nach dem Einsetzen der Ausgießeinrichtung in die Oberwand in zweckmäßiger Weise, z.B. mit einem klar definierten Gießstrahl, erfolgen kann.

Will man eine solche Packung mit Flüssigkeiten füllen, entstehen Dichtigkeitsprobleme, denn das Verschlußteil deckt nur nach dem Herunterklappen die Ausgießöffnung ab, ohne daß bestehende Spalte flüssigkeitsdicht verschlossen waren. Auch zwischen dem Lochrand im Oberboden und der separaten Ausgießeinrichtung können im Falle von Flüssigkeiten Dichtigkeitsprobleme auftreten. Der Öffnungskomfort und das Wiederverschließen lassen bisweilen zu wünschen übrig, denn die Gießkante der bekannten Ausgießeinrichtung muß über den vertikalen Rand am Tubusende hochgebogen sein, so daß die Betätigung der bekannten Einrichtung leidet.

Der Erfindung liegt die Aufgabe zugrunde, eine Ausgießeinrichtung der eingangs genannten Art zu schaffen, mit deren Hilfe ein Loch unterschiedlich ausgestalteter Packungen unter Verbesserung der Dichtigkeit gut verschlossen werden kann, um z.B. ein Lagern und Transportieren der Fließmittelpackung ohne Risiko der Leckage zu gewährleisten, andererseits aber auch für den Benutzer einen größeren Öffnungskomfort hat, vorzugsweise auch mit Öffnungsmarkierung, und eine erkennbare Sicherheit gegen unerlaubtes Manipulieren aufweist. Aufgabe ist ferner die Schaffung eines Verfahrens zur Herstellung einer solchen Ausgießeinrichtung, die mit großer Stückzahl pro Zeiteinheit in zuverlässiger Weise und wirtschaftlich herstellbar ist.

Gemäß der Erfindung wird diese Aufgabe für die Ausgießeinrichtung dadurch gelöst, daß das Unterteil einen Boden hat, zwischen Unter- und Verschlußteil eine die Ausgießöffnung und ihren Rand überdeckende und wenigstens das Unterteil an einer Stelle überragende Kunststoffolie angeordnet ist, die um die Ausgießöffnung herum am Unterteil dichtend und mit geringer Haftkraft angesiegelt ist, und daß beide becherförmigen Vertiefungen des Unterteils und des Verschlußteils fast den gleichen Außendurchmesser derart haben, daß sie unter Klemmung und/oder Rasten ineinandersteckbar sind. Der Öffnungskomfort und die Dichtigkeit der neuen Ausgießeinrichtung werden unter anderem dadurch verbessert, daß als Ausgießöffnung eine im Unterteil bereits vorgesehene Ausstanzung angeordnet ist, die vom Verschlußteil durch das Eingreifen dessen becherförmigen Teils in den becherförmigen Teil des Unterteils abgedeckt wird. Trotz des leichten Öffnens ist auch ein ungewolltes Herausschwappen von Fließmittel, insbesondere wenn es sich um Flüssigkeiten handelt, vermieden, denn das Unterteil besteht nicht nur wie im bekannten Fall aus einer Fläche mit Öffnung und einem von dieser nach unten hochstehenden Bund, sondern erfindungsgemäß hat auch das Unterteil einen Boden, wenngleich die Ausgießöffnung aus diesem ausgestanzt ist. Dadurch verbleibt ein umgebogener Bodenrand, welcher erheblich zur Verbesserung der Dichtigkeit beiträgt. Obwohl die Ausgießeinrichtung ohne die Kunststoffolie (nach dem erstmaligen Öffnen) einen Klemmverschluß hat, sind das Unterteil und das Verschlußteil auch mit dazwischen befindlicher und sich zwischen den hochstehenden Bünden erstreckender Kunststoffolie einklemmbar oder einrastbar.

Besonders zweckmäßig ist es, wenn die Ausgleßeinrichtung ganz aus Kunststoff besteht, wobei wenigstens das Unterteil und das Verschlußteil schweißfähig sind. Für diese Teile der Ausgießeinrichtung verwendet man vorzugsweise tiefziehfähiges Kunststoffmaterial, z. B. einen thermoplastischen Kunststoff, wie Polypropen. Auch PVC kann als ein solcher Kunststoff dienen, wobei Polypropen in der Technik weitgehend auch als Polypropylen bekannt ist. Die erfindungsgemäße Ausgießeinrichtung und hierbei mindestens Unter- und Verschlußteil, besteht aus einwandfrei wiederaufarbeitbaren und leicht verrottbaren Teilen und Materialien im Gegensatz zu vielen bekannten Ausgießeinrichtungen aus Verbundmaterialien von zum Beispiel Papier und Kunststoff. Bei einer besonders bevorzugten Ausführungsform kann man das Kunststoffmaterial, z. B. das Polypropen, auch füllen, wobei als Füllstoffe hier an Kreide, Glimmer, Talkum, Gips oder dergleichen gedacht ist. In der Praxis haben sich Füllgrade von bis zu 70 %, vorzugsweise 60 %, als günstig erwiesen. Es hat sich gezeigt, daß derartige gefüllte Kunststoffmaterialien einerseits leicht verrottbar sind, natürlich auch ohne weiteres und nach einfachen Methoden wieder aufgearbeitet bzw. rezykliert werden können und andererseits die Eigenschaften eines Kunststoffes nicht beeinträchtigen, so daß derartige gefüllte Kunststoffmaterialien insbesondere tiefziehfähig und auch siegelfähig sind.

Die neue Ausgießeinrichtung gemäß der Erfindung ist als Zwischenprodukt flach; denn es werden nur ein ausgestanztes Unterteil, in welches durch diese Ausstanzung die Ausgießöffnung eingebracht wird, und ein Verschlußteil, die beide für sich zunächst eben sind, längs der Scharnierlinie aufeinandergefaltet und haben dadurch hervorragende Stapelungseigenschaften. Man kann sie in großen Massen lagern, beispielsweise reihenweise auf Rollen - wie ein endloses Band. Dadurch kann man die Laufzeit einer Packungsherstellungsmaschine sehr groß einrichten. Mit anderen Worten können Packungen mit der neuen Ausgießeinrichtung in großer Stückzahl nacheinander verschlossen werden, bis der Vorrat an gelagerten Ausgießeinrichtungen erschöpft ist und durch einen neuen ersetzt werden muß.

Der Bund ist praktisch die zylindermantelförmige Seitenwandung des Bechers, und der Boden dieser Vertiefung ist der Becherboden. Diese Ausgestaltung der becherförmigen Vertiefung wird vorzugsweise durch Tiefziehen nach der Abnahme der flachgelegten Unter- und Verschlußteile gewonnen, vorzugsweise erst beim Einsatz in der Packungsherstellungsmaschine, besonders bevorzugt nach dem Füllen der Packung und vor der Anbringung der Ausgießeinrichtung am Loch. Durch die Vertiefung im Verschlußteil hat der Hersteller der Ausgießeinrichtung die Möglichkeit, diese mit Hilfe des hochstehenden Bundes am Lochrand der Packung, der beispielsweise einen entsprechenden zylindermantelförmigen Ring aufweist, zu befestigen. Diese Befestigung ist bei der erfindungsgemäßen Ausgießeinrichtung ein einfaches Verbinden von Kunststoffteilen, die mittels Siegeln, Schweißen oder Kleben miteinander verbunden werden. Die becherförmige Vertiefung gibt mit Vorteil auch den Raum vor, um im Bereich des Bundes Werkzeuge zum Aneinanderdrücken der Wände anzubringen. Die Befestigung der erfindungsgemäßen Ausgießeinrichtung am Loch einer Fließmittelpackung kann aber auch über andere Flächen des Unterteils erfolgen, nämlich die im allgemeinen ebene Hauptfläche des Unterteils, weiche die becherförmige Vertiefung umgibt und auf dem Lochrand der Packung aufliegt.

Durch das Hineinbewegen der becherförmigen Vertiefung des Verschlußteils wird die im Unterteil ausgestanzte Ausgießöffnung vollständig verschlossen. Deshalb sollte zwischen der äußeren Oberfläche des Bechers des Verschlußteils und der inneren - genüberliegenden - Oberfläche des Bechers des Unterteils nur ein geringes Spiel vorhanden sein, damit sich eine gewisse Klemmwirkung ergibt. Diese kann man gegebenenfalls auch dadurch verstärken, daß man am unteren äußeren Ende des Bundes am Verschlußteil einen nach außen gerichteten Wulst vorsieht, der hinter eine mehr oder weniger weich ausgebildete Kante an der Innenoberfläche des Bundes des Unterteils schnappt. Der Bund der becherförmigen Vertiefung des Unterteils könnte entsprechend einen nach außen gerichteten Wulst aufweisen, so daß sich von innen her gesehen eine Erweiterung ergibt, in weiche sich der Wulst des Bundes der becherförmigen Vertiefung des Verschlußteils hineinlegen kann. Damit ist sogar eine gewisse Schnappwirkung, Verriegelungswirkung oder mindestens ein festes Klemmen erreicht, in gewissem Sinne sogar eine formschlüssige Verbindung zwischen Verschlußteil und Unterteil. Damit ist ersichtlich für die Ausgießeinrichtung gemäß der Erfindung ein gutes Verschließen für den Transport der Packung gewährleistet.

Selbst bei lose eingelegter Kunststoffolie wird ersichtlich beim Verschließen zusätzlich die Dichtigkeit verbessert, so daß auch Flüssigkeitspackungen auf diese Weise gegen ungewolltes Herausschwappen dichtend verschlossen werden können. Wird die Ausgießeinrichtung ferner vor dem Anbringen an dem zu verschließenden Loch der Fließmittelpackung tiefgezogen, dann kann die zwischen Unterteil und Verschlußteil eingelegte Kunststoffolie ohne besonderen oder zusätzlichen Arbeitsgang direkt beim Tiefziehen mitgezogen und verformt werden derart, daß die Folie sich auf der inneren Oberfläche der becherförmigen Vertiefung im Unterteil befindet. Daraus ergeben sich zwei besondere Vorteile. Der eine besteht in der bakteriologischen Dichtigkeit der Packung - selbst nach dem mechanischen Öffnen, d. h. Hochklappen des Verschlußteiles; denn wenn die Kunststoffolie nur am Unterteil angesiegelt ist, bewegt sie sich mit dem Hochklappen des Verschlußteils nicht mit, sondern bleibt dichtend in der becherförmigen Vertiefung des Unterteils hatten, so daß die Ausgießeinrichtung noch vollständig verschlossen ist.

Der zweite Vorteil liegt darin, daß der Benutzer sogar noch nach dem Hochklappen des Verschlußteils erkennt, daß die Packnung noch nicht geöffnet worden war. Infolgedessen kann der Hersteller der Ausgießeinrichtung oder auch der gesamten Fließmittelpackung eine mit einer solchen Kunststoffolie versehene Einrichtung als Öffnungsmarkierung verwenden. In der englischsprachigen Literatur würde man sagen, die Ausgießeinrichtung ist damit manipulationssicher. Jedes unerlaubte Manipulieren an der Packung ist durch die erwähnte Markierung sogleich sichtbar.

Selbstverständlich würde der Komfort des Öffnens leiden, wenn die Kunststoffolie nicht leicht aus der becherförmigen Vertiefung des Unterteils herausgelöst werden könnte. Deshalb ist die Kunststoffolie nur mit geringer Haftkraft am Unterteil angesiegelt. Darunter ist die schälfähige Befestigung zu verstehen, die in der englischsprachigen Literatur mit peelfähig bezeichnet ist. Es handelt sich also bei der Befestigung der Kunststoffolie auf dem Unterteil keineswegs um eine Materialverbindung und nicht um ein echtes Schweißen, sondern mehr um einen Klebevorgang mit der Folge, daß die Kunststoffolie leicht abgezogen und damit die Ausgießöffnung ohne großen Kraftaufwand vom Endverbraucher geöffnet werden kann.

Durch das Einlegen der Kunststoffolie ändert sich mit Vorteil an den günstigen Verschlußeigenschaften der Ausgießeinrichtung nichts. Die Kunststoffolie ist derart dünn ausgestaltet, daß sie beim Tiefziehen den Dehnungsvorgang mitmacht und sich ohne weiteres auch über den geringfügig nach außen vorstehenden Wulst außen an der becherförmigen Vertiefung des Verschlußteils legt und dennoch über den Rand der Ausgießöffnung und vorzugsweise den Bund der becherförmigen Vertiefung des Unterteils, sich nach oben über dieses nach außen erstreckend, legt.

Der Unterschied, d. h. die Differenz oder der Abstand zwischen der äußeren Oberfläche der becherförmigen Vertiefung des Verschlußteils und der inneren Oberfläche der becherförmigen Vertiefung des Unterteils, soll für das Einlegen der Kunststoffolie zwar ein sehr geringes Spiel sein, weil die Kunststoffolie aber zur Erreichung der oben bezeichneten Eigenschaften sehr dünn ausgestaltet wird, ist ein Herunterdrücken des Verschlußteils nach dem Öffnen mit KIemmwirkung in der gleichen Weise möglich, wie oben bei der Beschreibung der Ausgießeinrichtung ohne eingelegte Kunststoffolie erwähnt. Die eingelegte Folie soll auch derart dünn ausgestaltet sein, daß nach dem Entfernen der Folie, d. h. nach dem vollständigen Öffnen der Ausgießeinrichtung, zum Wiederverschließen wiederum ein Herunterdrücken des Verschlußteils mit Einrastwirkung in das Unterteil möglich ist. Deshalb wird der Fachmann die Kunststoffolie mit geeigneten Materialien und derart dünnen Maßen ausgestalten, daß die Folie für das Tiefziehen ausreichend dehnfähig ist, so daß sie beim Tiefziehen nicht zerstört wird.

Zweckmäßig ist es ferner, wenn erfindungsgemäß eine Greifeinrichtung an einer Stelle des Verschlußteils, vorzugsweise diametral gegenüber dem Scharnier, angebracht ist. Diese Greifeinrichtung kann vorzugsweise in Verlängerung der oberen Fläche des Verschlußteils als abgerundete Spitze mit ausgestanztem Loch ausgebildet sein. Die Greifeinrichtung am Verschlußteil ragt also über die Gießkante des Unterteils um etwa 3 bis 10 mm in Richtung entgegengesetzt dem Scharnier vor, so daß bei geschlossenem Zustand der Ausgießeinrichtung das Verschlußteil mit der Greifeinrichtung ein Stück weit, z.B. die vorgenannten 5 mm, über die Gießkante hinaussteht. Um für den Endverbraucher beim Öffnen die Friktion und Haltekraft zu verbessern, damit beim erstmaligen Öffnen und Ergreifen der Greifeinrichtung diese nicht zwischen den Fingern herausrutscht, ist es zweckmäßig, wenn die Greifeinrichtung aus dieser nach vorn verlängerten Zunge mit eingestanztem Loch besteht. Dieses Loch kann beispielsweise kreisförmig sein, also ein Kreisringloch darstellen; kann aber auch dreieckförmig sein, wobei die Spitze zur äußersten Kante der Greifeinrichtung vom Scharnier fort nach vorn gerichtet ist.

Das Verschlußteil und/oder gegebenenfalls auch das Unterteil sind vorzugsweise aus einer Bahn, einem Bogen bzw. einer Folie mit einer Dicke von 0,1 bis 1,5 mm hergestellt, vorzugsweise 0,5 bis 1 mm. Die Ausgießeinrichtung mit der vorgenannten Greifeinrichtung kann sehr flach ausgestaltet sein, d.h. mit minimalem Höhenmaß, so daß eine mit der Ausgießeinrichtung gemäß der Erfindung versehene Verpackung gut stapelfähig bleibt.

Es ist bevorzugt, wenn das vordere verjüngte Ende des Verschlußteils, wo die Greifeinrichtung angeordnet ist, so ausgestaltet, d.h. wenn die Greifeinrichtung bezüglich der Außenkante so angeordnet ist, daß die Gießkante des Unterteils bei geschlossener Ausgießeinrichtung immer abgedeckt ist.

Weiterhin ist es erfindungsgemäß vorteilhaft, wenn nahezu alle äußeren Oberflächen des Unterteils im geschlossenen Zustand der Ausgießeinrichtung bei heruntergeklapptem Verschlußteil vom Verschlußteil abgedeckt sind. Bei den Oberflächen des Unterteils handelt es sich um Flächen, die mit dem Füllgut in Berührung kommen können und auf denen, wenigstens teilweise, nach dem teilweisen Entleeren der Fließmittelpackung Füllgut verblieben kann mit der Folge, daß von hier aus Verunreinigungen gesammelt oder zum Beispiel im Falle von Milch als Füllgut Bakterien gebildet werden. Durch Staub und andere Schmutzteilchen sind besonders diejenigen Flächen gefährdet, die mit Füllgut in Berührung kommen. Wenn solche Oberflächen richtig abgedeckt sind, wie erfindungsgemäß vorgesehen, dann kann die Hygiene einer solchen Packung erheblich verbessert werden.

Vorteilhaft ist es erfindungsgemäß ferner, wenn die Kunststoffolie aus mindestens zwei Schichten derart aufgebaut ist, daß die dem Verschlußteil gegenüberliegende Oberfläche der Kunststoffolie mit dem Verschlußteil im wesentlichen nicht versiegelbar und/oder verklebbar ist Es ist möglich, Kunststoffmaterialien für die eingelegte Folie vorzusehen, die mit dem Kunststoffmaterial von Unterteil und Verschlußteil verschweißbar ist, durch ein aufgebrachtes Versiegelungs-Verschlechterungsmittel aber auf einer Oberfläche so beschichtet ist, daß durch die Hitzeeinwirkung beim Tiefziehen die Kunststoffolie sich mit dem Verschlußteil nicht verbindet, nicht einmal an diesem angeklebt ist, hingegen dem Unterteil gegenüber schälfähig verbunden wird. Dadurch ergeben sich die erwünschten Vorteile eines leichten mechanischen Öffnens des Verschlußteils, wenn gleichwohl die Ausgießöffnung im Unterteil danach von der Kunststoffolie noch vollständig bakteriologisch dichtend verschlossen bleibt Durch die Versiegelung der Kunststoffolie auf dem Unterteil mit geringer Haftkraft, d. h. mit den Eigenschaften der Schälfähigkeit, kann der Endverbraucher die Kunststoffolie dann schälend von der Ausgießöffnung abziehen und letztere öffnen.

Als Beispiel für ein Material der Folie, welches auf die Materialart von Verschlußteil und Unterteil abgestimmt sein muß, kann man im Falle von Polypropylen für Unterteil und Verschlußteil ein Folienmaterial aus Polyester verwenden, weil sich Polyester mit Polypropylen bzw. Polypropen beim Tiefziehen nicht verbindet. Zur Erreichung der Ansiegelung am Unterteil bzw. schälfähigen Verklebung der Folie mit dem Unterteil wird die dem Unterteil gegenüberliegende Oberfläche der Kunststoffolie mit Polyethylen beschichtet Diese Beschichtung sorgt für die schälfähige Verbindung zwischen Kunststoffolie und Unterteil durch die Einwirkung der Wärme infolge des Tiefziehens.

Für den Hersteller der vorstehend beschriebenen Ausgießeinrichtung ist besonders ein Verfahren interessant, welches durch einfache Maßnahmen unter Aufwendung nur geringer Materialmengen in der Lage ist, eine Ausgießeinrichtung zu schaffen, die für die Anbringung an einem Loch einer Packung für fließfähiges Füllgut geeignet ist Für die geeignete Ausgestaltung eines solchen Herstellungsverfahrens wird erfindungsgemäß vorgesehen, daß aus einem Bogen oder einer endlosen Bahn aus tiefziehfähigem Kunststoff durch Ausstanzen eine Reihe von hintereinanderliegenden und sich punkt- und/oder linienweise berührenden Zuschnitten in Form jeweils eines Unterteils mit einer Ausgießöffnung und eines Verschlußteils gebildet wird, die über einen Steg miteinander verbunden sind, eine Kunststoffolie in Bandform lose über die Unterteile der Reihe von Zuschnitten aufgelegt wird, diese Reihe von Zuschnitten längs der Stege umgefaltet und aufeinandergelegt und einem Tiefziehvorgang unterworfen wird, bei dem Unter- und Verschlußteil zur Ausgestaltung von becherförmigen Vertiefungen gemeinsam tiefgezogen werden, wobei die Kunststoffolie gemeinsam mit dem Unter- und Verschlußteil tiefgezogen und hierbei einseitig mit dem Unterteil schälfähig verbunden wird, diese Reihe zu einer Wickel als transportables Zwischenprodukt aufgerollt wird und das Unter- und Verschlußteil danach vereinzelt und dann am Loch der Packung angebracht werden.

Die Zuschnitte befinden sich in der oben schon angedeuteten Weise vorteilhaft im Zustand als transportables Zwischenprodukt in flachem Zustand. Sie können also sehr platzsparend auf eine Wickel aufgerollt werden. Außerdem ist die Herstellung derartiger Zuschnitte sehr einfach; denn man braucht sie nur einer Stanz- und nachfolgend einer Faltvorrichtung zuzuführen. Die Zuschnitte werden in vorteilhafter Weise erst vereinzelt, wenn sie einer Packungsherstellungsmaschine zugeführt sind, mit deren Hilfe die Ausgießeinrichtungen einzeln nacheinander an den Packungen angebracht werden. Zuvor verbleiben die Zuschnitte, wenngleich auch vorbehandelt, in Strangform, d. h. man kann immer eine Reihe, gegebenenfalls auch eine sehr lange Reihe von einigen hundert Zuschnitten bzw. Ausgießeinrichtungen, handhaben.

Dabei ist es besonders bevorzugt, wenn nach dem Ausstanzen und vor dem Umfallen über die Unterteile der Reihe von Zuschnitten eine Kunststoffolie in Bandforrn lose aufgelegt wird. Die Herstellung der vorzugsweise auf einer Oberfläche mit geeignetem Material beschichteten Kunststoffolie ist einfach und für den Fachmann an sich bekannt. Dabei ist es für das Herstellungsverfahren besonders günstig, wenn die Kunststoffolie von einer Lagerrolle oder dergleichen in Bandform oder Bahnform geeigneter Breite abgezogen und so über die Unterteile der Reihe von Zuschnitten aufgelegt wird, daß danach die Verschlußteile umgefaltet und flach auf die Unterteile aufgelegt werden. Die Kunststoffolie deckt dabei von der Faltkante, d. h. dem Scharnier des umgefalteten Zuschnitts, die ganze Breite, innerhalb welcher sich auch die Ausgießöffnung befindet, bis zur gegenüberliegenden Seite ab.

Bis zur Erreichung des transportablen Zwischenproduktes, d. h. der umgefalteten Verschluß- und Unterteile - vorzugsweise mit eingelegter Kunststoffolie - entfällt also jeder Tiefzieh- oder Schweißvorgang, und die ausgestanzten Flächen bilden Materialteile, die nach dem Stanzvorgang sofort rezykliert werden können.

Es ist ferner vorgesehen, daß die umgefalteten Zuschnitte einem Tiefziehvorgang unterworfen werden, bei dem Unter- und Verschlußteil zur Ausgestaltung der becherförmigen Vertiefungen gemeinsam tiefgezogen werden, danach vereinzelt und dann am Loch der Packung angebracht werden. Damit wird in vorteilhafter Weise der ein gewisses Volumen einnehmende Deckel bzw. die in gewisser Weise als voluminös zu bezeichnende Ausgießeinrichtung erst kurz vor dem Einbringen in die Packung oder kurz vor dem Befestigen am Loch der Fließmittelpackung erstellt. Die sich ergebenden Vorteile einer platzsparenden Lagerung des Zwischenproduktes in Strangform ist oben bereits erwähnt.

Dadurch, daß die Kunststoffolie, vorzugsweise ein Polyesterfilm, beim Tiefziehvorgang gegenüber den Kunststoffmaterialien von Unterteil und Verschlußteil chemisch stabil ist, andererseits auf der dem Unterteil gegenüberliegenden Oberfläche der Kunststoffolie eine Polyethylenbeschichtung aufgebracht worden ist, so daß das Unterteil sich mit dieser Schicht zu einer guten Klebeverbindung oder einer Siegelverbindung mit geringer Haftkraft verbinden kann, ist ein leichtes Öffnen der vollständig verschlossenen Fließmittelpackung in zwei Stufen möglich, nämlich die erste Stufe des mechanischen Öffnens beim Hochklappen des Verschlußteils, wobei nur eine Einrastkraft überwunden werden muß, und zweitens das Abschälen der Kunststoffolie aus der becherförmigen Vertiefung des Unterteils, um die Ausgießeinrichtung endgültig zu öffnen.

Die bei der speziellen Ausführungsform ausgewählte Polyesterfolie ist bezüglich des Tiefziehvorganges weniger hitzeempfindlich und hat also eine hohe Festigkeit gegenüber Erweichung und Verbindung mit dem Verschlußteil einerseits und wird beim Tiefziehvorgang selbst aber auch andererseits nicht beschädigt, ist also ausreichend dehnfähig. Damit ist also auch nach dem Tiefziehvorgang eine absolute Dichtigkeit der erfindungsgemäßen Ausgießeinrichtung gewährleistet, wenn diese insbesondere mit der Kunststoffolie ausgestattet ist.

Weitere Vorteile vorteilhafte, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen
- Fig. 1: eine abgebrochene vertikale Querschnittsansicht einer ausgewählten Ausführungsform von Ausgießeinrichtung, die am zylindermantelförmig hochstehenden Lochrand einer Packung angebracht ist, im geschlossenen Zustand,
- Fig. 2: die gleiche Ansicht wie Fig. 1, jedoch in geöffnetem Zustand,
- Fig. 3: die Ausgießeinrichtung perspektivisch und geschlossen,
- Fig. 4: die Ausgießeinrichtung perspektivisch, aber nachdem das Verschlußteil hochgeklappt ist,
- Fig. 5: die Ausgießeinrichtung perspektivisch, nachdem nach dem Hochklappen des Verschlußteils auch die Kunststoffolie entfernt ist,
- Fig. 6: bei einer speziellen Ausführungsform des Herstellungsverfahrens einen Bogen aus Kunststoffmaterial, z. B. Polypropylen,
- Fig. 7: eine Reihe von ausgestanzten und noch flachliegenden Zuschnitten aus dem Bogen der Fig. 6,
- Fig. 8: den nächsten Verfahrensschritt bei der Herstellung der Ausgießeinrichtung, bei welchem auf die noch nicht tiefgezogenen Verschlußteile eine Kunststoffolie lose aufgelegt ist,
- Fig. 9: den dem Schritt der Fig. 8 nachfolgende Schritt des Herstellungsverfahrens, bei welchem die mit der ausgestanzten Ausgießöffnung versehenen Unterteile um die gemeinsame Faltlinie, welche das Scharnier darstellt, umgefaltet sind, immer noch in Strangform,
- Fig. 10: die Andeutung der Vereinzelung durch horizontale Striche, deren unterer durch einen Pfeil betont wird, wobei links neben der Einrichtungsreihe nach Fig. 10 die gleiche Darstellung wie in Fig. 9 wiedergegeben ist, um die kontinuierliche Art der Herstellung deutlicher zu veranschaulichen,
- Fig. 11: eine Querschnittsansicht der Einrichtungsreihe der Fig. 10 entlang der Linie XI-XI der Fig. 10,
- Fig. 12: die Draufsicht eines noch nicht tiefgezogenen Zuschnittes, der vereinzelt ist, während eine andere Ausführungsform der Zuschnitte, noch in der Reihe angeordnet, in Figur 7 dargestellt ist, und
- Figur 13: eine perspektivische Ansicht der Ausgießeinrichtung der anderen Ausführungsform, wie sie - bei geänderter Gießkante - aus dem Zuschnitt nach Figur 12 gewonnen werden kann, vergleichbar mit der Darstellung der Figur 4 der ersten Ausführungsform.

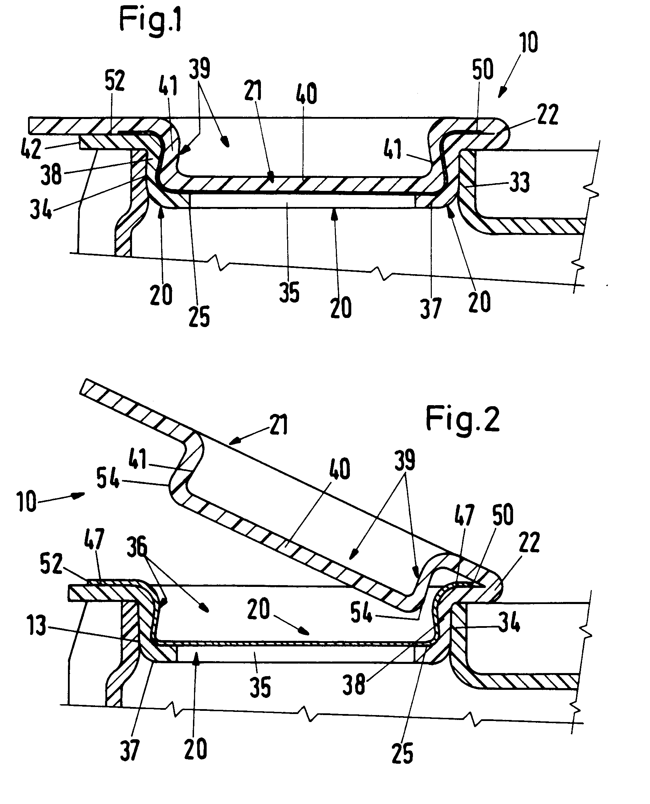

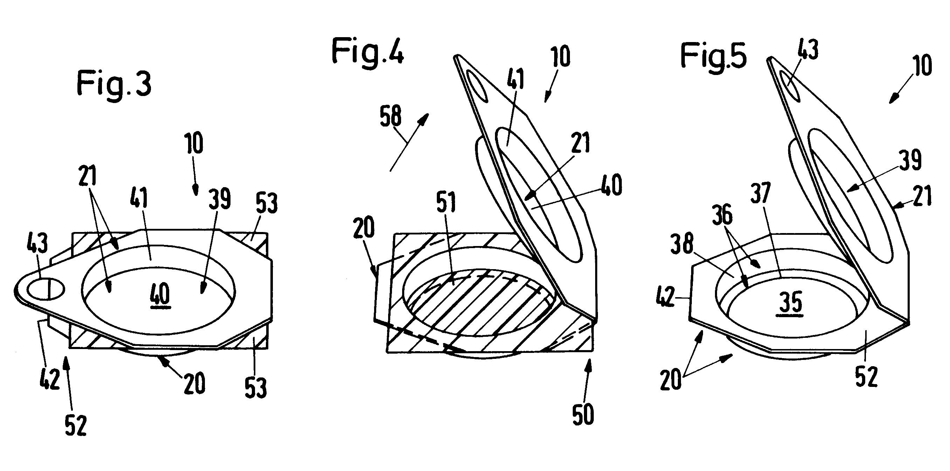

Die perspektivisch in Fig. 3 dargestellte Ausgießeinrichtung ist allgemein mit 10 bezeichnet (Fig. 1 bis 5). Sie ist bei der Darstellung der Fig. 1 und 2 in den zylindermantelförmig hochstehenden Rand 33 des Loches 13 einer nichtgezeigten Flüssigkeitspackung eingeklebt oder eingesiegelt gezeigt. Die Klebe- oder Siegellinie, längs welcher die Ausgießeinrichtung 10 am Rand 33 des Loches 13 der Packung angesiegelt ist, ist mit 34 bezeichnet. Sie hat deshalb ringförmige Gestalt, weil das Loch 13 und auch die dementsprechenden Außenkonturen der Ausgießeinrichtung 10 bei der hier gezeigten Ausführungsform kreisrund sind.

Die Ausgießeinrichtung besteht aus dem Unterteil 20 und dem Verschlußteil 21, die über das gemeinsame Scharnier 22 bewegbar angelenkt miteinander verbunden sind.

Das Unterteil weist eine becherförmige Vertiefung 36 mit dem Boden 37 und dem an dessen Rand hochstehenden Kragen 38 auf. Im Boden 37 befindet sich die Ausgießöffnung 35.

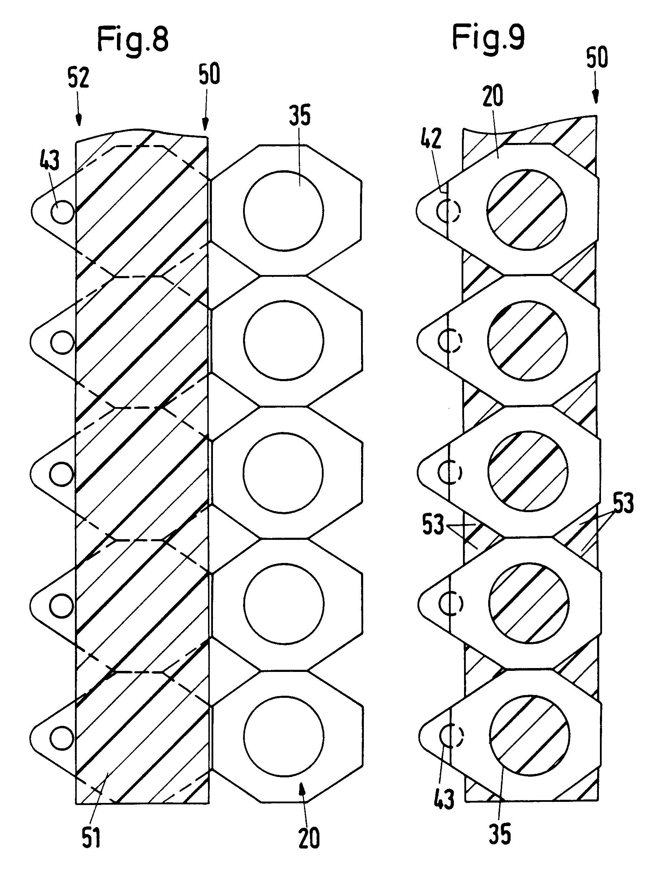

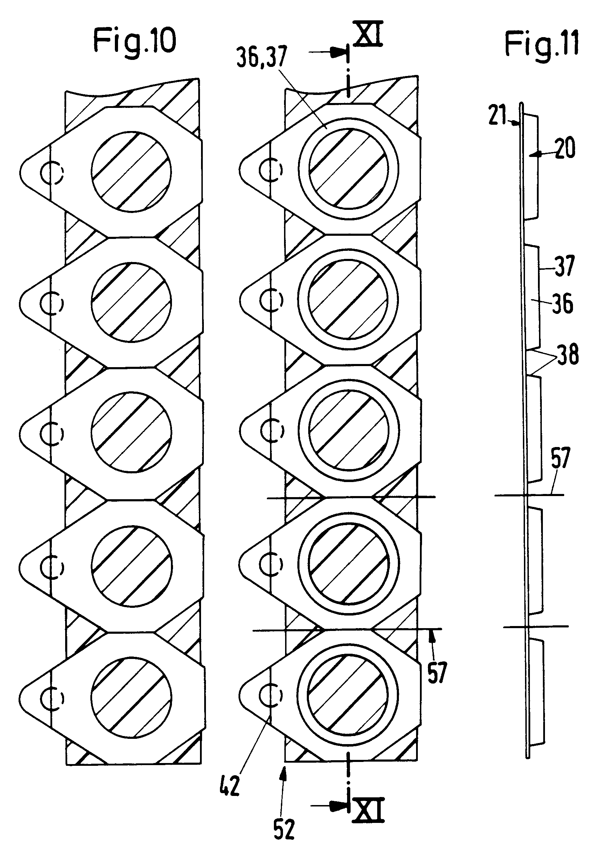

Auch das Verschlußteil 21 hat eine becherförmige Vertiefung 39 mit einem Boden 40 und einem an dessen zylindermantelförmigem Rand hochstehenden Bund 41. Am Verschlußteil 21 ist diametral gegenüber dem Scharnier 22 eine kreislochförmige Greifeinrichtung 43 angebracht, deren das Loch umgebende Material beim umgefalteten Verschlußteil 21 ein Stück weit über das Unterteil 20 hinübersteht, wie man in der Querschnittsansicht der Fig. 1 erkennt und bei der noch nicht tiefgezogenen Ausgießeinrichtung mit Blick von unten nach dem Umfalten gemäß Fig. 9 und 10 links von der Endlinie 42 sieht, welche letztlich auch die Gießkante darstellt.

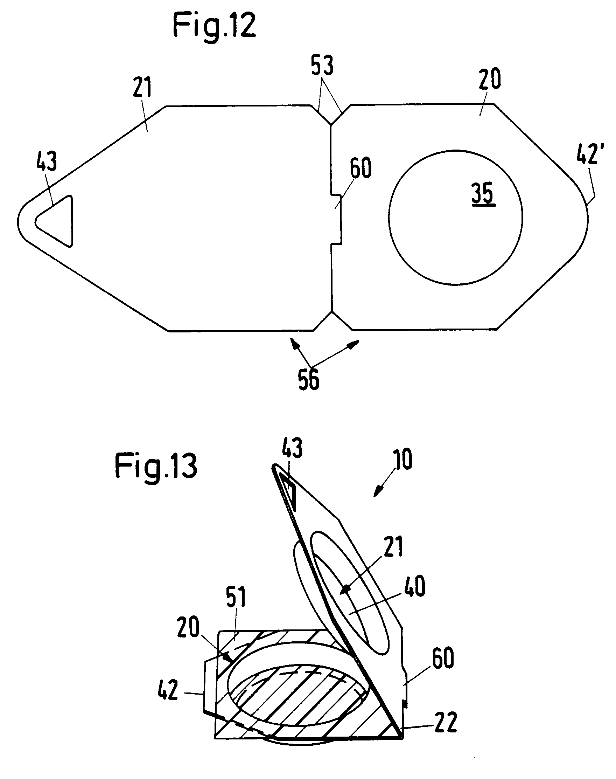

Eine andere Ausführungsform der Ausgießeinrichtung 10 ist in den Figuren 12 und 13 dargestellt, die beide gleich sind mit der Ausnahme, daß die in Figur 13 noch gerade ausgestaltete Ausgießkante 42 bei der Ausführungsform bzw. dem Zuschnitt 56 der Figur 12 abgerundet ist. Gleichwohl ist auch dort die am weitesten vom Scharnier nach außen ragende Kante 42' nicht weiter nach außen herausstehend als die gerade Kante 42 nach Figur 13 mit dem Ziel, daß das Verschlußteil 21 im geschlossenen Zustand die gesamte obere Fläche des Unterteils 20 bis zur Gießkante 42' oder 42 abdeckt.

Während vorstehend die Greifeinrichtung 43 kreislochförmig ist, kann man bei den Ausführungsform nach den Figuren 12 und 13 erkennen, daß das ausgestanzte Loch dreieckförmig ist derart, daß die der Spitze abgewandte Querlinie des dreieckförmigen Loches, die parallel zum Scharnier verläuft, etwa über oder etwas außerhalb der Gießkante 42, 42' im zusammengefalteten, verschlossenen Zustand zu liegen kommt. Allen Ausführungsformen der Greifeinrichtung 43 gemeinsam ist, daß diese allein durch ein ausgestanztes Loch gebildet wird und nicht durch Tiefziehen oder dergleichen. Gleichwohl können die Finger beim Greifen nicht abrutschen, so daß die erfindungsgemäße Greifeinrichtung eine erhöhte Friktion für den Endverbraucher vorsieht.

Mit 25 ist die Grenzlinie der Ausgießöffnung 35 im Boden 37 der becherförmigen Vertiefung 36 des Unterteils 20 bezeichnet.

Von der Linie 50, welches die innere Endkante einer Kunststoffolie 51 darstellt und die in den Fig. 1 und 2 als ein Punkt 50 dargestellt ist, bis zur gegenüberliegenden Linie 52, welches die äußere Endkante der Kunststoffolie 51 ist und die in den Fig. 1 und 2 wiederum als ein Punkt 52 dargestellt ist, erstreckt sich die Kunststoffolie 51 über die geschlossene, um die becherförmige Vertiefung 36 des Unterteils 20 befindliche, ringförmige ebene Oberfläche 53 in einer Weise, wie in den Fig. 3 und 4 dargestellt ist. Diese ringförmige, ebene Randfläche 52 wird also von der Kunststoffolie 51 nur unter Freilassung der Gießkante 20, im übrigen vollständig, abgedeckt wobei an vier Stellen 53 die Kunststoffolie 51 über die Fläche der Ausgießeinrichtung 10 sogar dreieckförmig übersteht.

In den Fig. 1 und 2 erkennt man auch den im unteren Bereich (nahe dem Boden 40) der becherförmigen Vertiefung des Verschlußteils 21 an ihrem Bund 41 nach außen vorstehende Wulst 54, welche in eine entsprechende, nicht näher bezeichnete Ringausnehmung durch eine entsprechende Wulst neben dem Rand 25 des Bundes 38 der becherförmigen Vertiefung 36 des Unterteils 20 einrastbar ist.

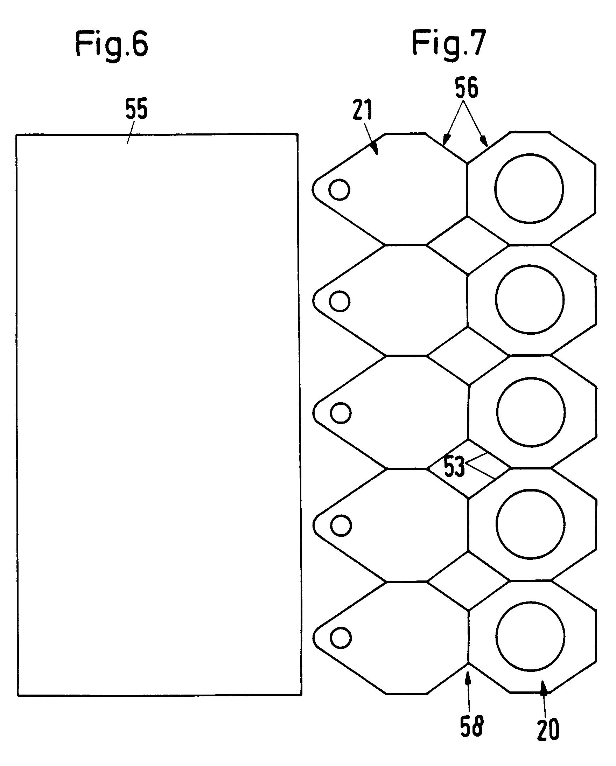

Die Herstellung der Ausgießeinrichtung läßt sich am besten anhand der Fig. 6 bis 11 darstellen. Aus dem Bogen 55 der Fig. 6 aus einer Polypropylenfolie werden durch Ausstanzen Zuschnitte 56 In Form einer Reihe gemäß Darstellung der Fig. 7 erzeugt, wobei das Ringloch 43 als Greifeinrichtung, die Ausgießöffnung 35 und die karoartigen Zwischenstücke an den Stellen 53 entfallen sind. Die einzelnen Zuschnitte haben eine gemeinsame Grenzlinie 57, die als Schnittlinie 57 in den Fig. 10 und 11 deutlicher dargestellt ist. Außerdem haben alle Zuschnitte 56 der in Fig. 7 dargestellten Reihe eine gemeinsame Faltlinie 58, welche das spätere Scharnier 22 der jeweiligen Ausgießeinrichtung 10 wird.

Nach dem Ausstanzen zum Erreichen der Reihenform der Zuschnitte 56 nach Fig. 7 wird beim nächsten Herstsellungsschritt die Kunststoffolie 51 derarteingelegt, daß ihre Innenkante 50 dicht neben die Faltlinie 58 zu liegen kommt und ihre äußere Endkante 52 nicht die Ringlöcher 43 für die Greifeirichtung überdeckt. Dann ist der Zustand der Fig. 8 erreicht.

Es folgt das Umfalten der Reihe der Unterteile 20 um die gemeinsame Faltlinie 58 in den Zustand der Fig. 9, aus dem deutlich sichtbar wird, wie die zwischengelegte Kunststoffolie 51 an den Stellen 53 die Flächen sowohl von Unterteil 20 als auch Oberteil 21 überragen.

Die Reihe der noch nicht tiefgezogenen Ausgießeinrichtungen 10 gemäß Zustand der Fig. 9 stellt nun das transportable Zwischenprodukt dar und wird auf eine nicht näher bezeichnete Wickel aufgerollt, um einer Packungsherstellungsmaschine zugeführt zu werden.

Nun betrachten wir das Blatt mit den Fig. 10 und 11, auf welchem das Band der Zwischenprodukte gemäß Fig. 9 nochmals links in Wiederholung dargestellt ist als Zeichen dafür, daß die Reihe der Zuschnitte 56 mit zwischengelegter Kunststoffolie 51 von der Wickel abgerollt und nun in der Packungsherstellungsmaschine hinter der Füllstation der weiteren Verarbeitung zugeführt wird. Diese Verarbeitung besteht in erster Linie aus dem Tiefziehvorgang, welcher die becherförmigen Vertiefungen 36 und 39 in Unterteil 20 und Verschlußteil 21 schafft. Der tiefgezogene Zustand, d. h. die Reihe der Ausgießeinrichtungen, die noch aneinanderhaften, ist in Fig. 10 gezeigt. Im Querschnitt entlang der Linie XI-XI der Fig. 10 sehen die tiefgezogenen Ausgießeinrichtungen in Reihenform, d. h. noch aneinanderliegend, so aus wie in Fig. 11 dargestellt.

Bei einer anderen Herstellungsart wird erst der Schnitt entlang der Linie 57 (Fig. 10 und 11) durchgeführt und danach tiefgezogen. Jedenfalls erkennt man den Zustand der tiefgezogenen Ausgießeinrichtung 10, auch wenn sie vereinzelt ist, in Draufsicht und Querschnitt anhand der Fig. 10 und 11 und perspektivisch aus Fig. 3. Die fertig geformte Ausgießeinrichtung 10 nach Fig. 3 wird nun auf den hochstehenden Rand 33 des Loches 13 einer Fließmittelpackung aufgesetzt und dort befestigt, z. B. durch Klebung, Siegelung oder dergleichen.

Stellt man sich die Ausgießeinrichtung 10 nach Fig. 3 auf eine nicht dargestellte Fließmittelpackung aufgesiegelt vor, dann ist dies der Zustand, wie ihn der Endverbraucher antrifft.

Zum Öffnen ergreift der Endverbraucher die Greifeinrichtung 43 und zieht das Verschlußteil 21 in Richtung des gebogenen Pfeiles 58 (Fig. 4) hoch, wobei sich das Verschlußteil 21 ohne besonderen Kraftaufwand von der separat gehaltenen Kunststoffolie 51 trennt; denn auch beim Tiefziehvorgang ist keinerlei Siegel- oder Klebeeffekt zwischen dem Verschlußteil 21 und der diesem gegenüberliegenden Oberfläche der Kunststoffolie 51 entstanden. Es ist nun der Zustand der Fig. 4 erreicht. Man erkennt, daß die Ausgießöffnung 35 noch vollständig und bakteriologisch dichtend verschlossen ist. Von außen hat der Fachmann übrigens anhand der Fig. 3 durch die überstehenden Zipfel der Kunststoffolie 51 an den Stellen 53 erkannt, daß die Packung noch nicht geöffnet worden ist. Er kann also davon ausgehen, daß tatsächlich die Ausgießöffnung 35 noch bakteriologisch dicht verschlossen ist.

Um das Füllgut ausgießen zu können, ergreift der Endverbraucher nun vorzugsweise vorn neben der Gießkante 20 einen der herausstehenden Zipfel der Kunststoffolie 51 und zieht diese schälend aus der becherförmigen Vertiefung 36 des Unterteils 20 ab. Nach dem Entfernen der Kunststoffolie 51 ist der Zustand der Fig. 5 erreicht. Die Ausgießöffnung 35 liegt frei, und der Ausgießvorgang kann begonnen werden.

Nach teilweisem Ausgießen des körnigen oder flüssigen Fließmittels (Füllgut) kann die Ausgießeinrichtung auch bestens wiederverschlossen werden. Dafür wird mechanisch nur das Verschlußteil 21 entgegen der Richtung des gebogenen Pfeiles 58 heruntergeklappt und in die Rasterung eingeclipst. Allerdings sieht der Endverbraucher sofort, daß mangels herausstehender Teile der Kunststoffolie 51, z. B. an den Stellen 53, die Packung offensichtlich schon einmal geöffnet war.

Es kann vorkommen, daß die in den Figuren 1 bis 11 dargestellte Ausführungsform der Ausgießeinrichtung nach dem Öffnen und mehrmaligen Hochklappen sowie Herunterdrücken des Verschlußteils 21 gegenüber dem Unterteil 20 den Nachteil zeigt, daß für das nochmalige Ausgießen nach dem Hochklappen des Verschlußteils 21 in die in Figur 5 gezeigte Position in dieser Stellung nicht verbleibt sondern herunterfällt.

Um auch diesen Nachteil auszuschalten und das Ausgießen bequemer vorzusehen, ist erfindungsgemäß der Festhaltesteg 60 am Verschlußteil 21 angebracht, wie in den Figuren 12 und 13 gezeigt ist.

Der Zuschnitt 56 der Figur 12 sieht sehr ähnlich aus dem der Reihe der Zuschnitte der Figur 7, nur daß die Faltlinie 58 in der Mitte unterbrochen ist derart, daß durch einen U-förmigen Stanzschlitz eine Unterbrechung erfolgt, ohne daß danach die Scharnierfunktion beeinträchtigt wäre. Man sieht bei dem fertigen Verschlußteil 21 der Ausführungsform der Figur 13 nach dem Tiefziehen, wie der Festhaltesteg 60 sich auf der Höhe der oberen Ebene des Verschlußteils 21 befindet und sich nach hinten erstreckt, d.h. in die der Greifeinrichtung 43 gegenüberliegende Richtung ragend.

Der Sinn der Ausgießeinrichtung gemäß der Erfindung ist das Aufsetzen auf das Loch einer zu verschließenden Fließmittelpackung. Wenn nun im Bereich des Loches an der Packung ein Steg, eine Naht, eine Kante oder dergleichen in geeigneter Höhe vorhanden ist, wird der Festhaltesteg beim Hochklappen in die in Figur 13 gezeigte Position mit dieser Naht, der Kante oder anderweitigen Erhebung in Eingriff kommen, so daß entweder eine Einrastung, eine Klemmwirkung oder wenigstens eine Friktion so entsteht, daß das Verschlußteil 10 in der in Figur 13 gezeigten Position stehen bleibt. Der Endverbraucher kann dann den Inhalt ohne weiteres ausgießen.

Die Ausführungsform der Ausgießeinrichtung nach Figur 13 hat im Bereich des Scharniers 22 nicht die oben insbesondere in Verbindung mit Figur 7 und Figur 3 gezeigten Stellen 53, an denen Verschlußteil 21 und Unterteil 20 ausgestanzt sind, so daß sich Teile der Kunststoffolie sichtbar dort hinauserstrecken. Das ist auch nicht notwendig, denn es genügt für den Öffnungsvorgang vollständig, wenn die Kunststoffolie 51 an den vorderen Ecken neben der Gießkante 42 herausstehen und vom Endverbraucher dort ergriffen werden, wenn die Packung erstmals geöffnet werden soll.

Bei der Ausführungsform der Figur 12 gibt es allerdings wieder diese Stellen 53 durch das karoartige Ausstanzen, wie oben in Verbindung mit Figur 7 beschrieben wurde. Die Ausstanzungen 53 bei der Figur 12 sind jedoch kleiner als bei der Ausführungsform der Figur 7. Praktisch sind nur die Außenkanten gebrochen. Die Kunststoffolie 51 ragt dann nur noch kaum sichtbar heraus. Es ergibt sich hierdurch ein ansprechendes Aussehen.

Gegenüber der Ausführungsform der Figur 13 ist die Gießkante 42' bei der Ausführungsform der Ausgießeinrichtung nach Figur 12 abgerundet worden. Hierdurch ergibt sich der Vorteil, daß man auch bei Schräghalten der geöffneten Fließmittelpackung das Füllgut in alle Richtungen besser ausgießen kann. Ferner ist es vorteilhaft, daß der Endverbraucher durch die Verkleinerung der Fläche neben der vordersten, mittleren Stelle der Gießkante 42 beim ersten Öffnen nicht etwa unter die Gießkante greift, wodurch die Öffnungsfunktion beeinträchtigt würde. Durch die abgerundete neue Gießkante 42' entfällt dieses Untergreifen der Gießkante, so daß ohne besondere Achtsamkeit die Öffnungsfunktion auch bei der Handhabung der Ausgießeinrichtung nicht beeinträchtigt werden kann.

Betrachtet man das Zwischenprodukt, bei welchem nach dem Ausstanzen auf dem Unterteil eine Kunststoffolie lose aufgelegt ist, über die das Verschlußteil durch Umfalten darübergelegt ist, dann versteht man die Art der Verbindung der Kunststoffolie in der schälfähigen Art und Weise besser, wenn man beachtet, daß die Kunststoffolie gemeinsam mit dem Unter- und Verschlußteil tiefgezogen und hierbei einseitig mit dem Unterteil schälfähig verbunden wird. Durch den mehrschichtigen Aufbau der Kunststoffolie 51 derart, daß die dem Verschlußteil zugewandte Seite aus einem Material besteht, welches mit dem Verschlußteil beim Tiefziehen keinerlei Siegel- oder Klebeverbindung eingeht, während eine andere, dem Unterteil zugewandte Schicht der Kunststoffolie 51 aus mit dem Unterteil versiegelbarem Material besteht, könnte man versuchen, die Kunststoffolie mit dem Unterteil durch einen besonderen Siegelvorgang zu verbinden. Diesen Weg geht die Erfindung in vorteilhafter Weise aber nicht sondern erspart sich den besonderen Siegelvorgang, bei dem auch eine nur schälfähige Verbindung mit geringer Haftkraft zwischen Kunststoffolie und Unterteil schwierig zu erreichen wäre. Vielmehr wird erfindungsgemäß das Unter- und Verschlußteil mit der eingelegten Kunststoffolie gemeinsam tiefgezogen, und allein durch die bei diesem Tiefziehen entstehende Wärme oder Molekülverschiebung beim Verformen entsteht die schälfähige Verbindung zwischen der unteren Schicht der Kunststoffolie mit dem Verschlußteil.

## Patentansprüche

1. Ausgießeinrichtung aus Kunststoff für die Anbringung an einem Loch (13) einer Packung für fließfähiges Füllgut, wobei die Ausgießeinrichtung (10) ein Unterteil (20) mit einer Ausgießöffnung (35) und ein Verschlußteil (21) aufweist, die über ein Scharnier (22) bewegbar angelenkt miteinander verbunden sind, und das Verschlußteil (21) eine becherförmige Vertiefung (39) mit einem Boden (40) und einem an dessen Rand hochstehenden Bund (41) aufweist, das Unterteil (20) auch einen hochstehenden Bund (38) hat und wobei die becherförmige Vertiefung (39) des Verschlußteils (21) in den hochstehenden Bund (30) des Unterteils (20) unter Abdeckung der Ausgießöffnung (35) hineinbewegbar ist, **dadurch gekennzeichnet**, daß das Unterteil (20) einen Boden (37) hat, zwischen Unter- (20) und Verschlußteil (21) eine die Ausgießöffnung (35) und ihren Rand (52) überdeckende und wenigstens das Unterteil (20) an einer Stelle (bei 53) überragende Kunststoffolie (51) angeordnet ist, die um die Ausgießöffnung (35) herum am Unterteil (20) dichtend und mit geringer Haftkraft angesiegelt ist, und daß beide becherförmigen Vertiefungen (36, 39) des Unterteils (20) und des Verschlußteils (21) fast den gleichen Außendurchmesser derart haben, daß sie unter Klemmung und/oder Rasten ineinandersteckbar sind.

2. Ausgießeinrichtung nach Anspruch 1, **dadurch gekennzeichnet,** daß das Unterteil (20) und das Verschlußteil (21) mit dazwischen befindlicher und sich zwischen den hochstehenden Bünden (38, 41) erstreckender Kunststoffolie (51) unter Klemmung und/oder Rasten ineinandersteckbar sind.

3. Ausgießeinrichtung nach Anspruch 1 oder 2, **dadurch gekennzeichnet**, daß eine Greifeinrichtung (43) an einer Stelle des Verschlußteils (21), vorzugsweise diametral gegenüber dem Scharnier (22), angebracht ist.

4. Ausgießeinrichtung nach Anspruch 1 bis 3, **dadurch gekennzeichnet**, daß nahezu alle äußeren Oberflächen des Unterteils (20) in geschlossenem Zustand der Ausgließeinrichtung (10) bei heruntergeklapptem Verschlußteil (21) vom Verschlußteil (21) abgedeckt sind.

5. Ausgießeinrichtung nach einem der Ansprüche 1 bis 4, **dadurch gekennzeichnet**, daß die Kunststoffolie (51) aus mindestens zwei Schichten derart aufgebaut ist, daß die dem Verschlußteil (21) gegenüberliegende Oberfläche der Kunststoffolie (51) mit dem Verschlußteil (21) im wesentlichen nicht versiegelbar und/oder verklebbar ist.

6. Ausgießeinrichtung nach einem der Ansprüche 1 bis 5, **dadurch gekennzeichnet,** daß im Bereich des Scharniers (22) ein Festhaltesteg (60) auf der Höhe der oberen Ebene des Verschlußteils (21) in die der Greifeinrichtung (43) gegenüberliegende Richtung ragend vorgesehen ist.

7. Verfahren zur Herstellung einer Ausgießeinrichtung (10) aus Kunststoff, insbesondere für die Anbringung an einem Loch (13) einer Packung für fließfähiges Füllgut, wobei aus einem Bogen (55) oder einer endlosen Bahn aus tiefziehfähigem Kunststoff durch Ausstanzen eine Reihe von hintereinanderliegenden und sich punkt- und/oder linienweise berührenden Zuschnitten (56) in Form jeweils eines Unterteiles (20) mit einer Ausgießöffnung (35) und eines Verschlußteiles (21) gebildet wird, die über einen Steg (22, 58) miteinander verbunden sind, eine Kunststoffolie (51) in Bandform lose über die Unterteile (20) der Reihe von Zuschnitten (56) aufgelegt wird, diese Reihe von Zuschnitten (56) längs der Stege (22, 58) umgefaltet und aufeinandergelegt und einem Tiefziehvorgang unterworfen wird, bei dem Unter(20) und Verschlußteil (21) zur Ausgestaltung von becherförmigen Vertiefungen (36, 39) gemeinsam tiefgezogen werden, wobei die Kunststoffolie (21) gemeinsam mitdem Unter- (20) und Verschlußteil (21) tiefgezogen und hierbei einseitig mit dem Unterteil (20) schälfähig verbunden wird, diese Reihe zu einer Wickel als transportables Zwischenprodukt aufgerollt wird und das Unter- (20) und Verschlußteil (21) danach vereinzelt (57) und dann am Loch (13) der Packung angebracht werden.

## Claims

1. Pouring apparatus made from plastics for fixing to a hole (13) in a package for flowable contents, wherein the pouring apparatus (10) is provided with a lower part (20) with a pouring aperture (35), and a closing part (21), which are joined together in a moveable manner by means of a hinge (22), and the closing part (21) is provided with a cup-shaped depression (39) with a base (40) and a protruding collar (41) on its edge, and the lower part (20) also has a protruding collar (38), and wherein the cup-shaped depression (39) of the closing part (21) can be moved into the protruding collar (30) of the lower part (21), covering the pouring aperture (35), characterised in that the lower part (20) has a base (37), a plastics foil (51) is arranged between the lower part (20) and closing part (21), covering the pouring aperture (35) and its edge (52), and projecting over at least one point (at 53) on the lower part (20), which is sealed with low adhesion around the pouring aperture (35) onto the lower part (20), and that the two cup-shaped depressions (36, 39), of the lower part (20) and the closing part (21), have almost the same external diameter, so that they can be fitted into one another by clamping and/or latching.

2. Pouring aperture according to claim 1, characterised in that the lower part (20) and the closing part (21) with the plastics foil (51) located in-between them and extending between the protruding collars (38, 41), can be fitted into one another by clamping and/ir latching.

3. Pouring aperture according to claim 1 or 2, characterised in that a grip (3) is provided on a place on the closing part (21), preferably diametrically opposite the hinge (22).

4. Pouring apparatus according to claims 1 to 3, characterised in that when the pouring apparatus (10) is in the closed position, with the closing part (21) folded down, almost all the external surfaces of the lower part (20) are covered by the closing part (21).

5. Pouring apparatus according to one of claims 1 to 4, characterised in that the plastics foil (51) is constructed from at least two layers such that the surface of the plastics foil (51) facing the closing part (21) is substantially non-sealable or non-adhesive with respect to the closing part (21).

6. Pouring apparatus according to one of claims 1 to 5, characterised in that in the area of the hinge (22) a retaining tab (60) is provided at the height of the upper plane of the closing part (21), projecting in the direction opposite to the grip (43).

7. Method for manufacturing a pouring apparatus (10) made from plastics, in particular for fixing on a hole (13) in a package for flowable contents, wherein a row of blanks (56), one behind the other and touching at points and/or along lines, each in the form of a lower part (20) with a pouring aperture (35) and a closing part (21) which are joined together by a tab (22, 58), is formed by being stamped out of a sheet (55) or a continuous web of deep-drawable plastics, a plastics foil (51) in web form is loosely laid over the lower parts (20) of the row of blanks (56), this row of blanks (56) is folded along the tabs (22, 58) and subjected to a deep-drawing procedure, in which the lower part (20) and closing part (21) are deep-drawn together to configure the cup-shaped depressions (36, 39), wherein the plastics foil (51) is deep drawn together with the lower (20) and closing part (21) and thereby bonded on one side to the lower part in a peelable manner, this row is rolled into a spool, forming a transportable intermediate product, and the lower (20) and closing part (21) are subsequently separated and attached to the hole (13) in the package.

## Revendications

1. Dispositif verseur en plastique, destiné à être rapporté à un trou (13) aménagé dans un emballage pour un produit fluide, où le dispositif verseur (10) comporte une partie inférieure (20) ayant un orifice verseur (35), et une pièce d'obturation (21), qui sont assemblées l'une à l'autre d'une manière articulée et mobile par l'intermédiaire d'une charnière (22), et la partie d'obturation (21) comporte un renfoncement en forme d'auge (39) ayant un fond (40) et une collerette (41) relevée sur son bord, la partie inférieure (20) possède aussi une collerette relevée (38), et où le renfoncement en forme d'auge (39) de la partie d'obturation (21) peut pénétrer dans la collerette relevée (30) de la partie inférieure (20) en recouvrant l'orifice verseur (35), caractérisé en ce que la partie inférieure (20) possède un fond (37) ; que, entre la partie inférieure (20) et la partie d'obturation (21) est disposée une feuille plastique (51), qui recouvre l'orifice verseur (35) et son bord (52) et dépasse au moins de la partie inférieure (20) en un point (en 53), feuille plastique qui est rapportée, par thermoscellage, autour de l'orifice verseur (35) d'une manière étanche contre la partie inférieure (20), et avec une faible force d'adhérence ; et que les deux renfoncements en forme d'auge (36, 39) de la partie inférieure (20) et de la partie d'obturation (21) ont presque le même diamètre extérieur, de façon à pouvoir être emboîtées l'une dans l'autre par serrage et/ou encliquetage.

2. Dispositif verseur selon la revendication 1, caractérisé en ce que la partie inférieure (20) et la partie d'obturation (21) peuvent être emboîtées l'une dans l'autre, par serrage et/ou encliquetage, avec la feuille plastique (51) se trouvant entre elles et s'étendant entre les collerettes relevées (38, 41).

3. Dispositif verseur selon la revendication 1 ou 2, caractérisé en ce qu'un dispositif de préhension (43) est rapporté en un point de la partie d'obturation (21), de préférence diamétralement opposé à la charnière (22).

4. Dispositif verseur selon les revendications 1 à 3, caractérisé en ce que la presque totalité des surfaces extérieures de la partie inférieure (20) sont, à l'état fermé du dispositif verseur (10), recouvertes de la partie d'obturation (21) quand la partie d'obturation (21) est rabattue vers le bas.

5. Dispositif verseur selon l'une des revendications 1 à 4, caractérisé en ce que la feuille plastique (51) est constituée d'au mois deux couches, de façon que la surface de la feuille plastique (51) opposée à la partie d'obturation (21) ne puisse essentiellement être thermoscellée et/ou collée à la partie d'obturation (21).

6. Dispositif verseur selon l'une des revendications 1 à 5, caractérisé en ce que, dans la zone de la charnière (22), on prévoit une traverse de retenue (60), qui, à hauteur du plan supérieur de la partie d'obturation (21), dépasse dans la direction opposée au dispositif de préhension (43).

7. Procédé pour fabriquer un dispositif verseur (10) en plastique, en particulier pour application contre un trou (13) d'un emballage pour un produit fluide, dans lequel, à partir d'une feuille individuelle (55) ou d'une bande sans fin en un matériau plastique emboutissable, on forme, par découpage, une série de découpes (56), disposées les unes en arrière des autres et en contact les unes avec les autres d'une manière ponctuelle et/ou linéaire, chacune se présentant sous forme d'une partie inférieure (20), comportant un orifice verseur (35), et d'une partie d'obturation (21), qui sont reliées l'une à l'autre par l'intermédiaire d'une traverse (22, 58) ; on applique d'une manière lâche une feuille plastique (51), sous forme de bande, sur les parties inférieures (20) de la série de découpes (56) ; on replie cette série de découpes (56) le long des traverses (22, 58) et on les applique les unes sur les autres, et on les soumet à une opération d'emboutissage profond, dans laquelle la partie inférieure (20) et la partie d'obturation (21) sont soumises à un emboutissage profond commun pour constituer les renfoncements en forme d'auge (36, 39), la feuille plastique (21) étant emboutie en même temps que la partie inférieure (20) et la partie d'obturation (21), et de ce fait est assemblée sur un côté, d'une manière pelable, avec la partie inférieure (20) ; on enroule cette série pour obtenir une bobine servant de produit intermédiaire transportable ; puis on individualise (57) la partie inférieure (20) et la partie d'obturation (21), puis on les rapporte au trou (13) de l'emballage.
